(19) Europäisches Patentamt
European Patent Office
Office européen des brevets

(11) **EP 3 743 852 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **19700462.5**

(22) Anmeldetag: **10.01.2019**

(51) Internationale Patentklassifikation (IPC):
**G06K 19/077** *(2006.01)* **G06K 7/10** *(2006.01)*
**G01S 13/87** *(2006.01)*

(52) Gemeinsame Patentklassifikation (CPC):
**G06K 7/10356; G01S 13/878; G06K 7/10128;**
**G06K 19/07796**

(86) Internationale Anmeldenummer:
**PCT/EP2019/050499**

(87) Internationale Veröffentlichungsnummer:
**WO 2019/145155 (01.08.2019 Gazette 2019/31)**

(54) **VERFAHREN UND VORRICHTUNG ZUM LOKALISIEREN EINES RFID-TRANSPONDERS SOWIE RFID-SYSTEM**

METHOD AND DEVICE FOR LOCATING AN RFID TRANSPONDER, AND RFID SYSTEM

PROCÉDÉ ET DISPOSITIF DESTINÉS À LOCALISER UN TRANSPONDEUR RFID ET SYSTÈME RFID

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.01.2018 DE 102018101753**
**01.06.2018 DE 102018113120**

(43) Veröffentlichungstag der Anmeldung:
**02.12.2020 Patentblatt 2020/49**

(73) Patentinhaber: **Fraunhofer-Gesellschaft zur Förderung**
**der angewandten Forschung e.V.**
**80686 München (DE)**

(72) Erfinder:
• **PSIUK, Rafael**
**90411 Nürnberg (DE)**

• **DRAEGER, Tobias**
**91083 Baiersdorf (DE)**
• **THIELECKE, Jörn**
**91056 Erlangen (DE)**
• **MÜLLER, Alfred**
**90411 Nürnberg (DE)**
• **SINGH, Maximilian**
**90411 Nürnberg (DE)**

(74) Vertreter: **2SPL Patentanwälte PartG mbB**
**Landaubogen 3**
**81373 München (DE)**

(56) Entgegenhaltungen:
**WO-A1-2006/067851 US-A1- 2004 179 510**
**US-A1- 2006 022 815**

## Beschreibung

### Technisches Gebiet

Die vorliegende Offenbarung befasst sich mit der Lokalisierung von RFID-Transpondern. Insbesondere betreffen Ausführungsbeispiele ein Verfahren und eine Vorrichtung zum Lokalisieren eines RFID-Transponders. Weitere Ausführungsbeispiele betreffen ferner ein RFID-System.

### Hintergrund

RFID (engl., Radio Frequency IDentification, Identifikation mit Hilfe von Hochfrequenz)-Systeme werden für verschiedenste Anwendung genutzt. Sie finden unter anderem Verwendung in der Logistik, der Produktion sowie bei Zugangssystemen. Es existieren drei Technologiefamilien, die sich jeweils in ihren Koppelmechanismen zwischen Lesegerät und Transponder sowie der zugrundeliegenden Frequenz unterscheiden. Die Eigenschaften der drei Technologien sind unterschiedlich, das Ziel ist jedoch das gleiche: Die drahtlose Identifikation von Objekten, an denen ein Transponder angebracht ist.

Die drei Technologien sind die LF (engl. Low Frequency, Niederfrequenz)-Technologie bei einer Operationsfrequenz von ca. 125 kHz, die HF (engl. High Frequency, Hochfrequenz)-Technologie bei einer Operationsfrequenz von ca. 13,56 MHz und die UHF (engl. Ultra High Frequency, Ultrahochfrequenz)-Technologie bei Operationsfrequenzen um ca. 868 MHz bzw. 925 MHz. Bei sämtlichen System kommen unterschiedliche Modulationsarten, Codierungen und Kommunikationsprotokolle zum Einsatz.

Sämtliche Transponder sind dafür entwickelt, eine Identifizierung zu ermöglichen. Jedoch sind Sie nicht hinsichtlich einer Ortungsfunktionalität optimiert. Sind nun mehrere Transponder gleichzeitig im Erregerfeld eines Lesegeräts vorhanden, so überlagern sich ihre Sekundär- bzw. Antwortfelder. Ohne bidirektionale Kommunikation zwischen Transponder und Lesegerät unter Verwendung eines komplexen Antikollisionsprotokolls ist eine eindeutige Zuordnung der im Lesegerät gemessenen Feldstärken zu den einzelnen Transpondern nicht möglich.

In der Druckschrift US 2006/022815 A1 werden ferner ein System und ein Verfahren zur Interferenzüberwachung in einem RFID-System vorgeschlagen.

Die Druckschrift US 2004/179510 A1 schlägt ein Verfahren zur Synchronisierung der Datenübertragung in einem Kommunikationssystem vor.

Zudem schlägt die Druckschrift WO 2006/067851 A1 ein Positionsbestimmungssystem vor, bei dem an einer Mehrzahl an Basisstationen jeweils eine Radiowellenempfangszeit mittels Korrelation eines Referenzsignals mit einer von einer Radiowellenquelle ausgesendeten Radiowelle bestimmt wird, um aus den Radiowellenempfangszeiten die Position der Radiowellenquelle zu bestimmen.

Es besteht ein Bedarf, eine verbesserte Möglichkeit zur Lokalisierung von RFID-Transpondern bereitzustellen.

### Zusammenfassung

Der Bedarf kann durch den Gegenstand der Patentansprüche gedeckt werden.

Ein Ausführungsbeispiel betrifft ein Verfahren zum Lokalisieren eines RFID-Transponders. Das Verfahren umfasst ein Erzeugen einer Mehrzahl an Messsignalen basierend auf einem von einer Mehrzahl an Sensoren gemessenen magnetischen Feld. Ferner umfasst das Verfahren ein Bestimmen eines jeweiligen Korrelationsgrads für jedes der Mehrzahl an Messsignalen mit einem Referenzsignal als Maß für die Stärke des von dem RFID-Transponder herrührenden Anteils an dem magnetischen Feld an der Position des jeweiligen Sensors mittels jeweiliger Kreuzkorrelation jedes der Mehrzahl an Messsignalen mit dem Referenzsignal. Das Referenzsignal basiert auf einer dem RFID-Transponder zugeordneten Datensequenz. Zudem umfasst das Verfahren ein Bestimmen einer Position des RFID-Transponders basierend auf den Korrelationsgraden der Mehrzahl an Messsignalen.

Ein weiteres Ausführungsbeispiel betrifft eine Vorrichtung zum Lokalisieren eines RFID-Transponders. Die Vorrichtung umfasst eine Mehrzahl an Sensoren, die eingerichtet sind, eine Mehrzahl an Messsignalen basierend auf einem von der Mehrzahl an Sensoren gemessenen magnetischen Feld zu erzeugen. Ferner umfasst die Vorrichtung eine Prozessierschaltung, die eingerichtet ist, einen jeweiligen Korrelationsgrad für jedes der Mehrzahl an Messsignalen mit einem Referenzsignal als Maß für die Stärke des von dem RFID-Transponder herrührenden Anteils an dem magnetischen Feld an der Position des jeweiligen Sensors mittels jeweiliger Kreuzkorrelation jedes der Mehrzahl an Messsignalen mit dem Referenzsignal zu bestimmen. Das Referenzsignal basiert auf einer dem RFID-Transponder zugeordneten Datensequenz. Die Prozessierschaltung ist ferner eingerichtet, eine Position des RFID-Transponders basierend auf den Korrelationsgraden der Mehrzahl an Messsignalen zu bestimmen.

### Figurenkurz beschreibung

Einige Beispiele von Vorrichtungen und/oder Verfahren werden nachfolgend bezugnehmend auf die beiliegenden Figuren lediglich beispielhaft näher erläutert. Es zeigen:

Fig. 1 zeigt ein Ausführungsbeispiel eines RFID-Systems;

Fig. 2 zeigt ein Beispiel eines Messsignals und eines Referenzsignals; und

Fig. 3 zeigt ein Ablaufdiagramm eines Ausführungsbeispiels eines Verfahrens zum Lokalisieren eines RFID-Transponders.

**Beschreibung**

Verschiedene Beispiele werden nun ausführlicher Bezug nehmend auf die beiliegenden Figuren beschrieben, in denen einige Beispiele dargestellt sind. In den Figuren können die Stärken von Linien, Schichten und/oder Bereichen zur Verdeutlichung übertrieben sein.

Während sich weitere Beispiele für verschiedene Modifikationen und alternative Formen eignen, sind dementsprechend einige bestimmte Beispiele derselben in den Figuren gezeigt und werden nachfolgend ausführlich beschrieben. Allerdings beschränkt diese detaillierte Beschreibung weitere Beispiele nicht auf die beschriebenen bestimmten Formen. Weitere Beispiele können alle Modifikationen, Entsprechungen und Alternativen abdecken, die in den Rahmen der Offenbarung fallen. Gleiche Bezugszeichen beziehen sich in der gesamten Beschreibung der Figuren auf gleiche oder ähnliche Elemente, die bei einem Vergleich miteinander identisch oder in modifizierter Form implementiert sein können, während sie die gleiche oder eine ähnliche Funktion bereitstellen.

Es versteht sich, dass, wenn ein Element als mit einem anderen Element "verbunden" oder "gekoppelt" bezeichnet wird, die Elemente direkt, oder über ein oder mehrere Zwischenelemente, verbunden oder gekoppelt sein können. Wenn zwei Elemente A und B unter Verwendung eines "oder" kombiniert werden, ist dies so zu verstehen, dass alle möglichen Kombinationen offenbart sind, d. h. nur A, nur B sowie A und B. Eine alternative Formulierung für die gleichen Kombinationen ist "zumindest eines von A und B". Das Gleiche gilt für Kombinationen von mehr als 2 Elementen.

Die Terminologie, die hier zum Beschreiben bestimmter Beispiele verwendet wird, soll nicht begrenzend für weitere Beispiele sein. Wenn eine Singularform, z. B. "ein, eine" und "der, die, das" verwendet wird und die Verwendung nur eines einzelnen Elements weder explizit noch implizit als verpflichtend definiert ist, können weitere Beispiele auch Pluralelemente verwenden, um die gleiche Funktion zu implementieren. Wenn eine Funktion nachfolgend als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei Gebrauch das Vorhandensein der angegebenen Merkmale, Ganzzahlen, Schritte, Operationen, Prozesse, Elemente, Komponenten und/oder einer Gruppe derselben präzisieren, aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Sofern nicht anderweitig definiert, werden alle Begriffe (einschließlich technischer und wissenschaftlicher Begriffe) hier in ihrer üblichen Bedeutung auf dem Gebiet verwendet, zu dem Beispiele gehören.

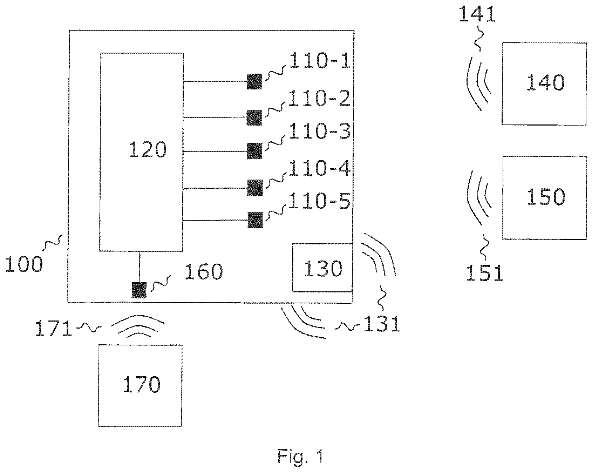

**Fig. 1** zeigt eine Vorrichtung 100 zum Lokalisieren eines RFID-Transponders 140. Vorrichtung 100 umfasst eine Mehrzahl an Sensoren 110-1, 110-2, 110-3, 110-4 und 110-5. Obwohl in Fig. 1 fünf Sensoren gezeigt sind, kann Vorrichtung 100 gleichwohl jede beliebige Anzahl an Sensoren aufweisen. Die Mehrzahl an Sensoren 110-1, 110-2, 110-3, 110-4 und 110-5 sind eingerichtet, eine Mehrzahl an Messsignalen basierend auf einem von der Mehrzahl an Sensoren gemessenen magnetischen Feld zu erzeugen. Jeder der Sensoren ist somit eingerichtet, ein jeweiliges Messsignal basierend auf dem an seiner jeweiligen Position gemessenen magnetischen Feld zu erzeugen. Die Mehrzahl an Sensoren 110-1, 110-2, 110-3, 110-4 und 110-5 kann grundsätzlich jeglichen Typ von Sensor umfassen, der geeignet ist, um die Stärke des magnetischen Felds zu messen. Beispielsweise können die Mehrzahl an Sensoren 110-1, 110-2, 110-3, 110-4 und 110-5 als Leiterschleife, Spule (mit einer oder mehreren Wicklungen), Antenne oder Magnetometer (z.B. Hallsensor) ausgeführt sein.

Das magnetische Feld ist dabei durch die magnetischen Felder der in der Nähe bzw. Umgebung der Vorrichtung 100 befindlichen RFID-Transponder bestimmt. Rein beispielhaft sind in Fig. 1 der RFID Transponder 140 sowie der weitere RFID-Transponder 150 gezeigt. Es versteht sich von selbst, dass weniger oder auch mehr RFID-Transponder in der Umgebung der Vorrichtung präsent sein können. Bei dem in Fig. 1 gezeigten Beispiel umfasst das magnetische Feld entsprechend eine von dem RFID-Transponder 140 erzeugte erste Feldkomponente 141 und eine von dem weiteren RFID-Transponder 150 erzeugte zweite Feldkomponente 151. Mit anderen Worten: Das von der Mehrzahl an Sensoren 110-1, 110-2, 110-3, 110-4 und 110-5 gemessene magnetische Feld ist eine Überlagerung der von den in der Nähe bzw. Umgebung der Vorrichtung 100 befindlichen RFID-Transpondern erzeugten (ausgeprägten) magnetischen Feldern.

Der RFID-Transponder 140 nutzt eine ihm zugeordnete Datensequenz, um sein Sekundärfeld auszuprägen bzw. zu modulieren. Die in RFID-Transpondern gespeicherten Daten werden in einigen Ausführungsbeispielen von diesen vor der Übertragung codiert (z.B. mittels Manchester- oder Biphasecodierung). Die von dem RFID-Transponder 140 erzeugte erste Feldkomponente 141 kann somit unter Verwendung einer codierten Datensequenz, die auf der dem RFID-Transponder 140 zugeordneten Datensequenz basiert, erzeugt sein. Entsprechend kann auch die zweite Feldkomponente 151 des weiteren RFID-Transponders 150 unter Verwendung einer weiteren codierten Datensequenz, die auf einer dem weiteren RFID-Transponder 150 zugeordneten weiteren Datensequenz basiert, erzeugt sein. Die codierte Datensequenz des RFID-Transponders 140 ist dabei orthogonal zu der weiteren codierten Datensequenz des weiteren RFID-Transponders 150. Die dem RFID-Transponder 140 zugeordnete Datensequenz kann dabei selbst orthogonal zu der dem weiteren RFID-Transponder 150 zugeordneten Datensequenz sein. Alternativ können die RFID-Transponder auf die Codierung verzichten. Entsprechend basieren die Feldkomponenten dann unmittelbar auf den zueinander orthogonalen Datensequenzen der RFID-Transponder. Mit anderen Worten: Die von dem RFID-Transponder 140 erzeugte erste Feldkomponente 141 trägt erste Daten, die auf der dem RFID-Transponder 140 zugeordneten Datensequenz basieren. Die von dem weiteren RFID-Transponder 150 erzeugte zweite Feldkomponente 151 trägt zweite Daten, die auf einer dem weiteren RFID-Transponder 150 zugeordneten weiteren Datensequenz basieren, wobei die ersten Daten orthogonal zu den zweiten Daten sind.

Die Transponder 140 und 150 können z.B. eingerichtet sein, ihre Feldkomponenten 141 bzw. 151 mit einer Frequenz von weniger als 500 kHz (LF-Transponder) oder einer Frequenz zwischen 1 MHz und 100 MHz (HF Transponder) zu erzeugen.

Die RFID-Transponder 140 und 150 nutzen somit jeweilige zugeordnete Datensequenzen, die z.B. nach der transponderspezifischen Codierung über Orthogonalität zueinander verfügen. Mit anderen Worten: Jeder der RFID-Transponder 140 und 150 moduliert eine jeweilige Feldkomponente des magnetischen Felds mit zueinander orthogonalen Daten. Die dem RFID-Transponder 140 (oder dem weiteren RFID-Transponder 150 oder sonstigen RFID-Transpondern) zugeordneten Datensequenz kann beispielsweise eine Hadamard-Sequenz, eine Walsh-Sequenz, eine Gold-Sequenz oder eine Folge maximaler Länge (auch bekannt als M-Sequenz) sein. Die dem RFID-Transponder 140 (oder dem weiteren RFID-Transponder 150 oder sonstigen RFID-Transpondern) zugeordnete Datensequenz ist jedoch nicht auf die vorgenannten Sequenzen beschränkt. Vielmehr kann jede Sequenz verwendet werden, die vor und/oder nach der Codierung durch einen RFID-Transponder (noch) genügend orthogonal zu entsprechend codierten Sequenzen weiterer RFID-Transponder ist.

Die Orthogonalität der in den einzelnen Feldkomponenten der jeweiligen RFID-Transpondern enthaltenen Informationen kann nunmehr genutzt werden, um die Anteile der einzelnen RFID-Transponder 140, 150 an dem durch die Mehrzahl an Sensoren 110-1, 110-2, 110-3, 110-4 und 110-5 gemessenen magnetischen Feld zu bestimmen.

Die Vorrichtung 100 umfasst dazu ferner eine Prozessierschaltung 120, die mit der Mehrzahl an Sensoren 110-1, 110-2, 110-3, 110-4 und 110-5 gekoppelt und eingerichtet ist, die Mehrzahl an Messsignalen zu empfangen. Die Auswerteschaltung 120 ist ferner eingerichtet, ein Referenzsignal mit jedem der Mehrzahl an Messsignalen zu korrelieren, und zwar erfindungsgemäß mittels Kreuzkorrelation, und einen jeweiligen Korrelationsgrad für jedes der Mehrzahl an Messsignalen mit dem Referenzsignal zu bestimmen. Das Referenzsignal basiert dabei auf der dem RFID-Transponder 140 zugeordneten Datensequenz. Durch die Korrelation des Referenzsignals mit der Mehrzahl an Messsignalen kann der von dem RFID-Transponder 140 herrührende Signalanteil an dem jeweiligen der Mehrzahl an Messsignalen bestimmt werden. Aufgrund der Orthogonalität der den einzelnen Feldkomponenten 141, 151 aufmodulierten Daten, hat die zweite Feldkomponente 151 keinen Einfluss auf die Korrelation eines der Messsignale mit dem Referenzsignal, welches auf der dem RFID-Transponder 140 zugeordneten Datensequenz basiert. Entsprechend kann der jeweilige Korrelationsgrad für jedes der Mehrzahl an Messsignalen mit dem Referenzsignal als ein Maß für die Stärke des von dem RFID-Transponder 140 herrührenden Feldanteils an der Position des jeweiligen Sensors aufgefasst werden.

Basierend darauf kann nun die Position des RFID-Transponders 140 bestimmt werden. Mit anderen Worten: Die Prozessierschaltung 120 ist ferner eingerichtet, die Position des RFID-Transponders 140 basierend auf den Korrelationsgraden der Mehrzahl an Messsignalen zu bestimmen.

Beispielsweise kann die Prozessierschaltung 120 eingerichtet sein, die Position des RFID-Transponders 140 durch Vergleichen der Korrelationsgrade der Mehrzahl an Messsignalen mit Sätzen von Referenzkorrelationsgraden zu bestimmen. Den Sätzen von Referenzkorrelationsgraden ist dabei jeweils eine mögliche (eindimensionale, zweidimensionale oder dreidimensionale) Position des RFID-Transponders zugeordnet. Während die Korrelationsgrade der Mehrzahl an Messsignalen als Maße für die tatsächliche Stärke des von dem RFID-Transponder 140 herrührenden Feldanteils an den Position der Mehrzahl an Sensoren 110-1, 110-2, 110-3, 110-4 und 110-5 angesehen werden können, können die Sätze von Referenzkorrelationsgraden als erwartete Werte für die Korrelationsgrade der Mehrzahl an Messsignalen bei einer Positionierung des RFID-Transponders 140 an bekannten Positionen verstanden werden. Effektiv erfolgt somit ein Vergleich des tatsächlichen Verlaufs der Feldstärke des von dem RFID-Transponder 140 herrührenden Teils des gemessenen magnetischen Felds über die Sensorpositionen mit bekannten Referenzverläufen für mögliche Positionen des RFID-Transponders 140.

Die Referenzkorrelationsgrade können beispielsweise jeweils durch eine Simulation bestimmt sein. Alternativ können die Referenzkorrelationsgrade jeweils auch durch Messungen bestimmt sein. Neben der Position kann den Sätzen von Referenzkorrelationsgraden ferner jeweils eine mögliche Orientierung des RFID-Transponders 140 zugeordnet sein.

Für den weiteren RFID-Transponder 150 kann die Prozessierschaltung 120 entsprechend eingerichtet sein, einen jeweiligen weiteren Korrelationsgrad für jedes der Mehrzahl an Messsignalen mit einem weiteren Referenzsignal zu bestimmen. Das weitere Referenzsignal basiert dabei auf der dem weiteren RFID-Transponder 150 zugeordneten Datensequenz. Aufgrund der Orthogonalität der Datensequenzen sowohl vor als auch nach der Codierung durch die RFID-Transponder kann so die Stärke des von dem weiteren RFID-Transponder 150 herrührenden Feldanteils an der Position des jeweiligen Sensors bestimmt werden. Entsprechend kann die Prozessierschaltung 120 ferner eingerichtet sein, eine Position des weiteren RFID-Transponders 150 basierend auf den weiteren Korrelationsgraden der Mehrzahl an Messsignalen zu bestimmen. Die Bestimmung der Korrelationsgrade sowie der weiteren Korrelationsgrade als auch die Bestimmung der Positionen des RFID-Transponders 140 sowie des weiteren RFID-Transponders 150 kann dabei simultan (parallel) erfolgen.

Die Vorrichtung 100 kann somit die eindimensionale, zweidimensionale oder dreidimensionale Lokalisierung von z.B. gewöhnlichen LF und HF RFID-Transpondern ermöglichen (es müssen lediglich jeweils die oben beschriebenen Datensequenzen in einen Speicher des jeweiligen RFID-Transponders geschrieben werden). Befindet sich ein RFID-Transponder mit seiner bekannten Datensequenz im Erregerfeld eines Lesegeräts, so kann die Höhe des Korrelationspeaks (d.h. der Korrelationsgrad) im RFID-Lesegerät als Indikator für die gemessene Feldstärke der jeweiligen Antenne angesehen werden. Durch Verrechnung der Korrelationspeaks (d.h. der Korrelationsgrade) kann (nach einer Kalibration) nach den oben genannten Grundsätzen der RFID-Transponder lokalisiert werden. Durch die Eigenschaft der Orthogonalität der einzelnen Datensequenzen sowohl vor als auch nach der Codierung, hat eine Datensequenz keinen Beitrag zum Korrelationspeak (d.h. dem Korrelationsgrad) der anderen dazu orthogonalen Sequenzen - und umgekehrt. Auf diese Weise können die Feldbeiträge der einzelnen RFID-Transponder, die zur Lokalisierung hergenommen werden, im Empfänger getrennt werden. Die Beeinflussung der einzelnen Transponderantworten wird durch die Orthogonalität der den Feldkomponenten aufmodulierten Daten verhindert, so dass eine simultane Lokalisierung mehrerer RFID-Transponder möglich ist. Derart kann eine aufwändige bidirektionale Kommunikation zwischen den RFID-Transpondern und einem Lesegerät entfallen, so dass Kommunikationsstandards mit ihren strikten Timing- bzw. Zeitvorgaben nicht eingehalten werden müssen.

Optional kann ebenfalls die Orientierung des RFID-Transponders bestimmt werden. Vorrichtung 100 kann zudem mit den gewöhnlichen Standardprotokollen für die integrierten Schaltungen für RFID-Transponder verwendet werden.

Um die Orthogonalität der den Feldkomponenten aufmodulierten Daten zu gewährleisten, kann es nötig sein, dass die Transponder im Wesentlichen synchron ihre Sekundärfelder ausprägen. Dies kann über die Kontrolle des von der Vorrichtung 100 bereitgestellten magnetischen Erregerfeldes 131 für die RFID-Transponder erfolgen.

Vorrichtung 100 umfasst eines oder mehrere Erregerelemente 130, um das magnetische Erregerfeld 131 auszuprägen. Dabei sind alle das magnetisches Erregerfeld 131 ausprägenden Erregerelemente eingerichtet, zunächst das Ausprägen des magnetischen Erregerfelds 131 (z.B. für eine vorbestimmte Dauer) zu unterbrechen und anschließend das Ausprägen des magnetischen Erregerfelds 131 wiederaufzunehmen, um das magnetische Erregerfeld 131 empfangende RFID-Transponder im Wesentlichen zeitgleich über das magnetische Erregerfeld 131 mit Energie zu versorgen.

Dieser Ansatz kann für RFID-Transponder, die in einem sogenannten Transponder-Talks-First (TTF)-Modus betrieben werden, verwendet werden, um eine gleichzeitige Modulierung des magnetischen Felds durch die RFID-Transponder zu erzwingen. Im TTF-Modus beginnt ein Transponder seine Antenne abhängig von auf dem RFID-Transponder hinterlegten Daten zu modulieren, sobald er einem genügend starken magnetischen Erregerfeld ausgesetzt ist. Durch das Unterbrechen des Ausprägens des magnetischen Erregerfelds 131 können nun zunächst alle RFID-Transponder im TTF-Modus deaktiviert werden, um anschließend durch die erneute Ausprägung des magnetischen Erregerfelds 131 im Wesentlichen zeitgleich wieder mit Energie versorgt und somit aktiviert zu werden. Unter der Annahme, dass die in Fig. 1 gezeigten RFID-Transponder 140 und 150 im TTF-Modus arbeiten, können diese gemäß dem vorbeschriebenen Schema für die Erzeugung des magnetischen Erregerfelds 131 gesteuert werden, im Wesentlichen zeitgleich ihre beiden Feldkomponenten 141 und 151 zu modulieren. Unabhängig davon welche konkrete Datensequenz die beiden RFID-Transponder 140 und 150 verwenden, kann die Synchronität und somit die Orthogonalität der den beiden Feldkomponenten 141 und 151 aufmodulierten Informationen gewährleistet werden. Beispielsweise kann der RFID-Transponder 140 eingerichtet sein, die erste Feldkomponente 141 als Reaktion auf den Empfang des magnetischen Erregerfelds 131 zu erzeugen.

Alternativ kann das magnetische Erregerfeld 131 auch ein Kommando zum Triggern der Transponderantworten umfassen. Das zumindest eine Erregerelement 130 kann also alternativ oder ergänzend eingerichtet sein, auf das magnetisches Erregerfeld 131 einen Befehl aufzumodulieren, der sämtliche den Befehl empfangende RFID-Transponder anweist, ein magnetisches Feld basierend auf in dem RFID-Transponder gespeicherten Daten auszuprägen. Selbst wenn die in Fig. 1 gezeigten RFID-Transponder 140 und 150 nicht den TTF-Modus unterstützen, können diese gemäß dem vorbeschriebenen Schema für die Erzeugung des magnetischen Erregerfelds 131 angesteuert werden, um im Wesentlichen zeitgleich ihre beiden Feldkomponenten 141 und 151 zu modulieren. Beispielsweise kann der RFID-Transponder 140 eingerichtet sein, die erste Feldkomponente 141 als Reaktion auf den Empfang des auf das magnetische Erregerfeld 131 aufmodulierten Befehls zu erzeugen. Der Befehl kann beispielsweise ein Standardbefehl für RFID-Lesegeräte sein.

Das zumindest eine Erregerelement 130 kann beispielsweise als Leiterschleife, Spule (mit einer oder mehreren Wicklungen) oder Antenne ausgeführt sein. Das zumindest eine Erregerelement 130 und die Mehrzahl an Sensoren 110-1, 110-2, 110-3, 110-4 und 110-5 können als separate Bauteile oder als einzelnes Bauteil ausgebildet sein. Das heißt, ein einzelnes Bauteil (z.B. eine Spule) kann in einigen Ausführungsbeispielen bei entsprechender Ansteuerung sowohl als Sensor als auch als Erregerelement dienen.

Werden beispielsweise Gold-Sequenzen oder Hadamard-Sequenzen, die dem Satz von Yuen genügen, verwendet, so müssen diese nicht zeitlich synchron sein. Hadamard-Sequenzen, die dem Satz von Yuen genügen, sind immer völlig (ideal) orthogonal.

Wie bereits oben beschrieben, kann die Synchronität und somit die Orthogonalität der den beiden Feldkomponenten 141 und 151 aufmodulierten Informationen (Datensequenzen) dadurch gewährleistet werden, dass z.B. das magnetische Erregerfeld 131 zyklisch ein- und ausgeschaltet wird. Die im Ausbreitungsbereich des magnetischen Erregerfelds 131 befindlichen RFID-Transponder können dadurch zurückgesetzt werden (engl. reset), so dass die RFID-Transponder im Wesentlichen zeitgleich ihre jeweiligen Feldkomponente modulieren.

Die verwendeten Datensequenzen können zueinander orthogonal sein, so dass sie von einander durch die Vorrichtung 100 unterscheidbar sind. Die Autokorrelationsfunktionen der einzelnen Datensequenzen können jedoch mehrere Korrelationspeaks aufweisen. Jede der Datensequenz erzeugt Peaks an verschiedenen Stellen. Ebenso können die einzelnen Datensequenzen unterschiedlich viele und unterschiedlich verteilte (Kreuz-)Korrelationspeaks aufweisen.

Falls sich der RFID-Transponder 140 nicht im Ausbreitungsbereich des magnetischen Erregerfelds 131 befinden würde und die Mehrzahl an Messsignalen (welche die Feldkomponente des weiteren RFID-Transponders 150 und optional weiterer RFID-Transponder im Ausbreitungsbereich des magnetischen Erregerfelds 131 repräsentieren) mit dem Referenzsignal, das auf der dem RFID-Transponder 140 zugeordneten Datensequenz basiert, korreliert werden würden, könnten sich eine Vielzahl an Korrelationspeaks ergeben. Diese könnten fälschlicherweise als Autokorrelationspeaks gesehen werden und zur weiteren Lokalisierung hergenommen werde, was zu einer ungewollten Lokalisierung des nicht im Ausbreitungsbereich des magnetischen Erregerfelds 131 befindlichen RFID-Transponders 140 führen würde.

Nachfolgend wir daher ein Ansatz beschrieben, um aus dem zeitlichen Korrelationsergebnis über alle Sensoren (z.B. Antennen) und den Referenzsignalen bzw. Datensequenzen den Zeitpunkt zu selektieren, bei dem sich die Korrelationspeaks der jeweiligen synchronen (und somit orthogonalen) Datensequenzen befinden. Zu diesem Zeitpunkt liegt nämlich ein tatsächlicher Autokorrelationspeak vor, zu dem alle Datensequenzen orthogonal zueinander sind und somit die Feldkomponenten der einzelnen RFID-Transponder vollständig trennbar sind. Somit kann eine zuverlässige und individuelle Lokalisierung einzelner RFID-Transponder anhand der Messsignale ermöglicht werden.

Die Vorrichtung 100 umfasst dazu einen Referenzsensor 160, der eingerichtet ist, basierend auf einer Messung des magnetischen Feldes ein Referenzmesssignal zu erzeugen. Der Referenzsensor 160 kann dabei ähnlich wie die Mehrzahl an Sensoren 110-1, 110-2, 110-3, 110-4 und 110-5 ausgebildet sein. Alternativ kann der Referenzsensor 160 kann auch verschieden von der Mehrzahl an Sensoren 110-1, 110-2, 110-3, 110-4 und 110-5 ausgebildet sein. Beispielsweise kann der Referenzsensor 160 als differentielle Antenne ausgebildet sein.

Neben den Feldkomponenten 141, 151 des RFID-Transponders 140 und des weiteren RFID-Transponders 150 umfasst das magnetische Feld eine von einem Referenz-RFID-Transponder 170 erzeugte Feldkomponente 171. Auch dem Referenz-RFID-Transponder 170 ist wiederum eine Datensequenz zugeordnet. Die Datensequenz kann beispielsweise so gewählt sein, dass sie wenige klar abgegrenzte Autokorrelationspeaks und wenige, schwach ausgeprägte Nebenpeaks aufweist. Mit anderen Worten: Die Datensequenz kann so gewählt sein, dass der Referenz-RFID-Transponder 170 (sehr) gute Autokorrelationseigenschaften aufweist.

Der Referenz-RFID-Transponder 170 kann beispielsweise etwas abgesetzt zu den (erwarteten bzw. möglichen) Positionen des RFID-Transponders 140 und des weiteren RFID-Transponders 150 angeordnet sein. Ebenso kann der Referenzsensor 160 etwas abgesetzt zu den (erwarteten bzw. möglichen) Positionen des RFID-Transponders 140 und des weiteren RFID-Transponders 150 angeordnet sein. Derart kann sichergestellt werden, dass der Referenzsensor 160 vorwiegend nur die von dem Referenz-RFID-Transponder 170 modulierte Feldkomponente 171 misst. Beispielsweise können der Referenzsensor 160 und der Referenz-RFID-Transponder 170 derart beabstandet von der Mehrzahl an Sensoren 110-1, 110-2, 110-3, 110-4 und 110-5 angeordnet sein, dass eine Signalstärke einer Signalkomponente, die auf der von dem Referenz-RFID-Transponder 170 erzeugten Feldkomponente 171 des magnetischen Feldes basiert, in dem Referenzmesssignal größer ist als eine summierte Signalstärke von Signalkomponenten, die auf von anderen RFID-Transponder (z.B. RFID-Transponder 140 und 150) erzeugten Feldkomponenten des magnetischen Feldes (z.B. Feldkomponenten 141 und 151) basieren. Unter dieser Bedingung kann ein Abstand $r_2$ der zu lokalisierenden RFID-Transponder von dem Referenzsensor 160 z.B. gemäß folgendem Ausdruck (1) bestimmt werden:

$$r_2 > r_1 * \sqrt[3]{X} \qquad (1),$$

wobei $r_1$ den Abstand des Referenz-RFID-Transponders 170 von dem Referenzsensor 160 und X die Anzahl der zu lokalisierenden RFID-Transponder bezeichnet.

Das magnetische Erregerfeld 131 wird sowohl im Bereich der zu lokalisierenden RFID-Transpondern 140 und 150 als auch im Bereich des Referenz-RFID-Transponders 170 vom gleichen Strom erregt. Beispielsweise können die zu lokalisierenden RFID-Transpondern 140 und 150 als auch der Referenz-RFID-Transponder 170 innerhalb einer das magnetische Erregerfeld 131 erzeugenden Leiterschleife angeordnet sein. Somit sehen sämtliche RFID-Transponder zur gleichen Zeit das magnetische Erregerfeld 131 und fangen daher im Wesentlichen gleichzeitig mit ihrer Feldmodulation an.

Die Prozessierschaltung 120 ist nun ferner eingerichtet, einen Zeitpunkt So einer maximalen Korrelation des Referenzmesssignals mit einem Kalibrationssignal zu bestimmen. Ähnlich wie die oben beschriebenen Referenzsignale basiert das Kalibrationssignal auf der dem Referenz-RFID-Transponder 170 zugeordneten Datensequenz.

Der Zeitpunkt So der maximalen Korrelation des Referenzmesssignals mit dem Kalibrationssignal (d.h. der Zeitpunkt des Auftretens des Autokorrelationspeaks für die dem Referenz-RFID-Transponder 170 zugeordnete Datensequenz) repräsentiert denjenigen Zeitpunkt, zu dem der Referenz-RFID-Transponder 170 beginnt, seine Feldkomponente 171 zu modulieren. Da sämtliche RFID-Transponder im Wesentlich zeitgleich von dem magnetischen Erregerfeld 131 mit Energie versorgt werden, kann angenommen werden, dass auch deren Autokorrelationspeaks im Wesentlichen zum Zeitpunkt $S_0$ auftreten.

Beim Bestimmen des jeweiligen Korrelationsgrads für jedes der Mehrzahl an Messsignalen mit dem Referenzsignal, das auf der dem RFID-Transponder 140 zugeordneten Datensequenz basiert, ist die Prozessierschaltung 120 dann entsprechend eingerichtet, das Referenzsignal und die Mehrzahl an Messsignalen auf den Zeitpunkt $S_0$ der maximalen Korrelation des Referenzmesssignals mit dem Kalibrationssignal zu synchronisieren.

Beispielsweise kann die Prozessierschaltung 120 eingerichtet sein, das synchronisierte Referenzsignal mit nur einem einzigen Signalabschnitt des Messsignals für zumindest eines (oder alle) der Mehrzahl an Messsignalen zu korrelieren, wobei der Signalabschnitt nur Messwerte des Messsignals ab dem Zeitpunkt $S_0$ der maximalen Korrelation des Referenzmesssignals mit dem Kalibrationssignal repräsentiert. Der derart bestimmte Korrelationsgrad repräsentiert den Anteil des RFID-Transponder 140 am jeweiligen Messsignal der Mehrzahl an Messsignalen, d.h. den Feldanteil des RFID-Transponder 140 an dem vom jeweiligen Sensor gemessenen Magnetfeld.

Mit dem vorbeschriebenen Ansatz kann nicht nur der korrekte Zeitpunkt So für die Bestimmung der Korrelationsgrade ermittelt werden, sondern auch der Rechenaufwand minimiert werden, da die Korrelation mit dem Referenzsignal für jedes Messsignal nur zu einem Zeitpunkt und nicht zu einer Vielzahl an Zeitpunkten (z.B. bei unterschiedlichen zeitlichen Offsets der Mehrzahl an Messsignalen zu dem Referenzsignal) durchgeführt werden müssen. Der Zeitpunkt So gibt zwar den Zeitpunkt an, an dem der Referenz-RFID-Transponder 170 tatsächlich mit der Feldmodulation beginnt, jedoch kann es z.B. aufgrund verschiedener Implementierungen des RFID-Transponders 140 und des weiteren RFID-Transponders 150 vorkommen, dass diese nicht zum selben Zeitpunkt So wie der Referenz-RFID-Transponder 170 mit der Feldmodulation beginnen. Beispielsweise kann der RFID-Transponder 140 früher und der weitere RFID-Transponder 150 später mit der Feldmodulation beginnen.

Wird nun für den Zeitpunkt So die Korrelation der Messsignale mit den Referenzsignalen für die beiden RFID-Transponder 140, 150 bestimmt (berechnet), kann sich durch die nicht exakte Synchronisation ein Fehler in dem Korrelationsergebnis ergeben. Bleibt die Abweichung kleiner als eine Symboldauer in den Referenzsignalen, gibt es immer noch Zeiträume zu denen die Datensequenzen perfekt orthogonal sind. Allerdings können die Anteile, an denen die Datensequenzen nicht orthogonal sind, einen Fehler in der Korrelationsberechnung verursachen. Der Fehler durch die Verschiebung trotz Synchronisierung ist abhängig von dem Verhältnis aus orthogonalem zu nicht-orthogonalen Anteil der von den RFID-Transpondern 140, 150 gesendeten Datensequenzen, aus denen sich das empfangene Signal zusammensetzt.

Nachfolgend wird daher ein Ansatz beschrieben, bei dem der für die Korrelation verwendete Anteil des orthogonalen Bereiches vergrößert und/oder der für die Korrelation verwendete Anteil des nicht-orthogonalen Bereiches verkleinert wird.

Die Verschiebung der gesendeten Datensequenzen untereinander kann auch als Verschiebung der Mehrzahl an Messsignalen der Sensoren 110-1, 110-2, 110-3, 110-4 und 110-5 zum bei der Korrelation verwendeten Referenzsignal aufgefasst werden, da dieses auf den Referenztransponder synchronisiert wird.

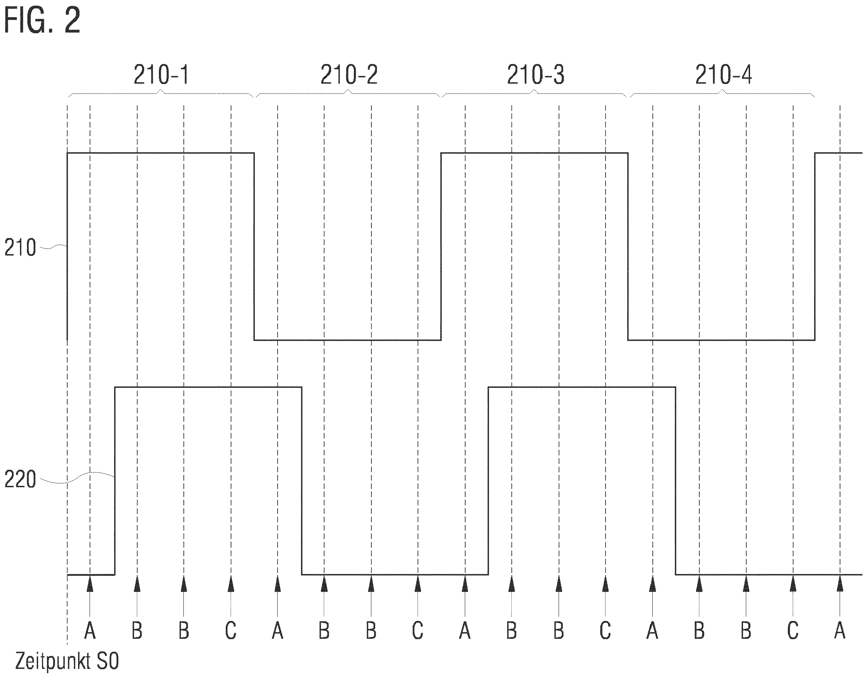

Dies ist beispielhaft in **Fig. 2** dargestellt, die ein auf den Zeitpunkt So synchronisiertes Referenzsignal 210 sowie einen Signalabschnitt 220 eines der Mehrzahl an Messsignalen, der nur Messwerte des Messsignals ab dem Zeitpunkt So der maximalen Korrelation des Referenzmesssignals mit dem Kalibrationssignal repräsentiert, zeigt. Bei dem Beispiel der Fig. 2 wird ein zeitdiskretes System angenommen, jedoch ist der vorgeschlagene Ansatz nicht auf zeitdiskrete Systeme beschränkt.

Wie bereits oben angedeutet, repräsentiert das Referenzsignal 210 eine Mehrzahl an Symbolen. Entsprechend umfasst das Referenzsignal eine Mehrzahl an Signalabschnitten 210-1, 210-2, 210-3, 210-4 etc., die jeweils eines der Symbole repräsentieren. Ein Symbol wird dabei durch mehrere Abtastwerte des Referenzsignals 210 repräsentiert. In dem Beispiel der Fig. 2 wird ein Symbol jeweils durch vier Abtastwerte repräsentiert - es kann jedoch auch jede andere Anzahl an Abtastwerten für die Repräsentation eines Symbols verwendet werden.

Bei perfekter (idealer) Synchronisation des Modulationsbeginns durch die RFID-Transponder 140, 150 wären die Datensequenzen für jeden Abtastwert orthogonal. Gibt es nun eine Verschiebung größer der Abtastdauer (engl. sample period), so gibt es auch einen Anteil der Abtastwert, an denen die Datensequenzen nicht mehr orthogonal sein müssen. Diese Abtastwerte befinden sich am Anfang bzw. Ende eines Symbols - je nachdem, ob der zu lokalisierende Transponder 140, 150 früher oder später als der Referenz-RFID-Transponder 170 mit der Feldmodulation beginnt. Bei dem in Fig. 2 gezeigten Beispiel beginnt der zu lokalisierende Transponder 140, 150 später als der Referenz-RFID-Transponder 170 mit der Feldmodulation.

Um die Fehler im Korrelationsergebnis zu minimieren, werden von der Prozessierschaltung 120 die Abtastwerte, die am wahrscheinlichsten außerhalb des orthogonalen Bereichs liegen, nicht in die Korrelation einbezogen. Da im Allgemeinen nicht bekannt ist, ob der zu lokalisierende Transponder 140, 150 früher oder später als der Referenz-RFID-Transponder 170 mit der Feldmodulation beginnt, liegen die Abtastwerte sowohl am Anfang als auch am Ende eines Symbols für das betrachtete Messsignal am wahrscheinlichsten außerhalb des orthogonalen Bereichs. Entsprechend werden daher z.B. nur die Abtastwerte in der Mitte eines Symbols in der Korrelation betrachtet.

Bei den in Fig. 2 gezeigten Beispiel ist der Signalabschnitt 220 des Messsignals um ein Sample zu dem Referenzsignal 210 verschoben (d.h. der Signalabschnitt 220 des Messsignals ist zu spät im Vergleich zum Referenzsignal 210). Entsprechend liegen die mit A bezeichneten Abtastwerte außerhalb des orthogonalen Bereichs und würden somit einen fehlerhaften Beitrag zur Korrelation liefern. Die mit B bezeichneten Abtastwerte sind am wahrscheinlichsten nicht von einer Zeitverschiebung betroffen. Wäre der Signalabschnitt 220 des Messsignals zu früh im Vergleich zum Referenzsignal 210, lägen die mit C bezeichneten Abtastwerte außerhalb des orthogonalen Bereichs und würden somit einen fehlerhaften Beitrag zur Korrelation liefern. Die mit A und C bezeichneten Abtastwerte sind daher mit einer gewissen Wahrscheinlichkeit von einer Zeitverschiebung betroffen. Entsprechend werden von der Prozessierschaltung 120 nur die mit B bezeichneten Abtastwerte des Referenzsignals 210 für die Korrelation genutzt. Würden statt vier z.B. acht Abtastwerte verwendet, könnten beispielsweise nur die beiden mittleren, die vier mittleren oder die sechs mittleren Abtastwerte für die Korrelation verwendet werden. Die Anzahl der verwendeten Abtastwerte pro Symbol kann gewählt werden. Je mehr der Abtastwerte pro Symbol genutzt werden, desto bessere Rauscheigenschaften können erzielt werden. Umgekehrt kann eine größere Toleranz gegenüber zeitlicher Asynchronität erzielt werden, je weniger der Abtastwerte pro Symbol genutzt werden.

Mit anderen Worten: Die Prozessierschaltung 120 ist eingerichtet, den Signalabschnitt 220 des Messsignals nur mit einem jeweiligen Teilbereich jedes der Mehrzahl an Signalabschnitten 210-1, 210-2, 210-3, 210-4 des synchronisierten Referenzsignals 210, der von einem Beginn und einem Ende des jeweiligen Signalabschnitts des Referenzsignals 210 einen vorbestimmten Abstand aufweist, zu korrelieren.

Auf diese Weise kann sowohl eine positive, als auch eine negative Zeitdifferenz der von dem zu lokalisierenden RFID-Transponder ausgesendeten Datensequenz zu den von den anderen RFID-Transpondern ausgesendeten Datensequenzen bzw. zu dem für die Korrelation verwendeten Referenzsignal ausgeglichen werden.

Dadurch werden das Verhältnis aus verwendetem orthogonalem zu nicht-orthogonalem Anteil des Messsignals zum Referenzsignal und somit auch das Korrelationsergebnis verbessert. Zudem kann der Rechenaufwand reduziert werden, da nicht mehr alle Abtastwerte bzw. die Signalabschnitte des Referenzsignals als Ganzes in der Korrelation betrachtet werden.

Beispielsweise können nicht zu verwendende Abtastwerte in dem Referenzsignal auf 0 gesetzt werden, so dass sie keinen Einfluss auf die Korrelation haben. Der vorgeschlagene Ansatz kann daher auch als eine Reduzierung der dem Referenzsignal zugrundeliegenden Datensequenz, d.h. als eine Codereduzierung, aufgefasst werden.

Die vorbeschriebene Synchronisierung der Messsignale und der Referenzsignale als auch die Reduzierung der dem Referenzsignal zugrundeliegenden Datensequenz können die zuverlässige Lokalisierung einer größeren Anzahl an RFID-Transpondern im Ausbreitungsbereich des magnetischen Erregerfelds 131 ermöglichen. Die Synchronisation der RFID-Transponder kann die Verwendung von Datensequenzen erlauben, die nur orthogonal sind, wenn sie synchron sind. Da es viel mehr Datensequenzen, die nur orthogonal sind, wenn sie synchron sind, gibt als Datensequenzen, die auch orthogonal sind, wenn sie nicht synchronisiert sind, kann der vorgeschlagene Ansatz somit eine Verbreiterung der für die Lokalisierung von RFID-Transpondern nutzbaren Datensequenzen ermöglichen.

Wie oben ausführlicher beschrieben, können im Empfänger (RFID-Lesegerät) die in den jeweiligen Antennen gemessenen Signale jeweils mit den bekannten, in den RFID-Transponder hinterlegten Datensequenzen korreliert werden. Befindet sich der RFID-Transponder mit seiner bekannten Datensequenz im Erregerfeld eines Lesegeräts, so kann die Höhe des Korrelationspeaks (d.h. der Korrelationsgrad) im RFID-Lesegerät als Indikator für die gemessene Feldstärke der jeweiligen Antenne angesehen werden. Durch Verrechnung der Korrelationspeaks (d.h. der Korrelationsgrade) kann (nach einer Kalibration) nach den oben genannten Grundsätzen der RFID-Transponder lokalisiert werden. Durch die Eigenschaft der Orthogonalität der einzelnen Datensequenzen sowohl vor als auch nach der Codierung, hat eine Datensequenz keinen Beitrag zum Korrelationspeak (d.h. dem Korrelationsgrad) der anderen dazu orthogonalen Sequenzen - und umgekehrt.

Auf diese Weise können die Feldbeiträge der einzelnen RFID-Transponder, die zur Lokalisierung hergenommen werden, im Empfänger getrennt werden. Die Beeinflussung der einzelnen Transponderantworten wird durch die Orthogonalität der einzelnen Datensequenzen verhindert, so dass eine simultane Lokalisierung mehrere RFID-Transponder möglich ist. Derart kann eine aufwändige bidirektionale Kommunikation zwischen dem RFID-Transponder und einem Lesegerät entfallen.

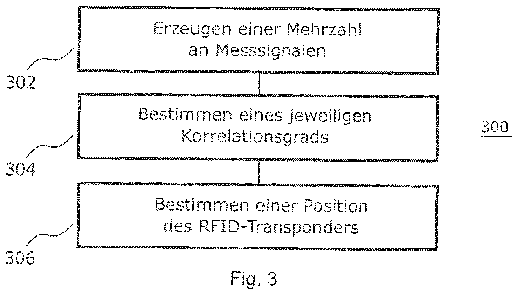

Um die oben beschriebenen Aspekte zur Lokalisierung von RFID-Transpondern nochmals zusammenzufassen, ist in **Fig. 3** noch ein Ablaufdiagramm eines Verfahrens 300 zum Lokalisieren eines RFID-Transpondern gezeigt. Verfahren 300 umfasst ein Erzeugen 302 einer Mehrzahl an Messsignalen basierend auf einem von einer Mehrzahl an Sensoren gemessenen magnetischen Feld. Ferner umfasst Verfahren 300 ein Bestimmen 304 eines jeweiligen Korrelationsgrads für jedes der Mehrzahl an Messsignalen mit einem Referenzsignal. Das Referenzsignal basiert auf einer dem RFID-Transponder zugeordneten Datensequenz. Zudem umfasst Verfahren 300 ein Bestimmen 306 einer Position des RFID-Transponders basierend auf den Korrelationsgraden der Mehrzahl an Messsignalen.

Weitere Details und Aspekte des Verfahrens sind oben in Zusammenhang mit weiteren Ausführungsbeispielen (z.B. Fig. 1) beschrieben. Das Verfahren kann eines oder mehrere optionale Merkmale gemäß den weiteren Ausführungsbeispielen umfassen.

Ausführungsbeispiele der vorliegenden Offenbarung betreffen somit unter anderem:

1) Ein Hinterlegen von bekannten, geeigneten Sequenzen als Daten für den TTF-Modus eines RFID-Transponders, die nach einer protokollspezifischen z.B. Manchester- oder Biphase-Codierung Orthogonalität zueinander aufweisen (z.B. Hadamard-Sequenzen). Dabei ist eine geringe Kreuzkorrelation der Sequenzen zueinander von Bedeutung.

2) Ein zyklisches Ausschalten des Erregerfelds, um die Transponder zu synchronisieren im TTF-Betrieb. So können mehr Sequenzen mit orthogonalem Charakter verwendet werden.

3) Trennung der Signale im Empfänger durch Korrelation.

4) Nutzen der Korrelationspeaks als Indikator für die Feldstärke in der jeweils gemessenen Antenne für den jeweiligen Transponder.

5) Lokalisierung und Schätzung der Orientierung basierend auf den hergeleiteten Feldstärken.

Die Aspekte und Merkmale, die zusammen mit einem oder mehreren der vorher detaillierten Beispiele und Figuren beschrieben sind, können auch mit einem oder mehreren der anderen Beispiele kombiniert werden, um ein gleiches Merkmal des anderen Beispiels zu ersetzen oder um das Merkmal in das andere Beispiel zusätzlich einzuführen.

Durch die Beschreibung und Zeichnungen werden nur die Grundsätze der Offenbarung dargestellt. Weiterhin sollen alle hier aufgeführten Beispiele grundsätzlich ausdrücklich nur Lehrzwecken dienen, um den Leser beim Verständnis der Grundsätze der Offenbarung und der durch den (die) Erfinder beigetragenen Konzepte zur Weiterentwicklung der Technik zu unterstützen. Alle hiesigen Aussagen über Grundsätze, Aspekte und Beispiele der Offenbarung sowie konkrete Beispiele derselben deren Entsprechungen umfassen.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht austauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

Weiterhin sind die folgenden Ansprüche hiermit in die detaillierte Beschreibung aufgenommen, wo jeder Anspruch als getrenntes Beispiel für sich stehen kann. Während jeder Anspruch als getrenntes Beispiel für sich stehen kann, ist zu beachten, dass - obwohl ein abhängiger Anspruch sich in den Ansprüchen auf eine bestimmte Kombination mit einem oder mehreren anderen Ansprüchen beziehen kann - andere Beispiele auch eine Kombination des abhängigen Anspruchs mit dem Gegenstand jedes anderen abhängigen oder unabhängigen Anspruchs umfassen können. Solche Kombinationen werden hier explizit vorgeschlagen, sofern nicht angegeben ist, dass eine bestimmte Kombination nicht beabsichtigt ist. Ferner sollen auch Merkmale eines Anspruchs für jeden anderen unabhängigen Anspruch eingeschlossen sein, selbst wenn dieser Anspruch nicht direkt abhängig von dem unabhängigen Anspruch gemacht ist.

**Patentansprüche**

1. Verfahren (300) zum Lokalisieren eines RFID-Transponders (140), umfassend:

   Erzeugen (302) einer Mehrzahl an Messsignalen basierend auf einem von einer Mehrzahl an Sensoren (110-1, 110-2, ..., 110-5) gemessenen magnetischen Feld;
   Bestimmen (304) eines jeweiligen Korrelationsgrads für jedes der Mehrzahl an Messsignalen mit einem Referenzsignal als Maß für die Stärke des von dem RFID-Transponder (140) herrührenden Anteils an dem magnetischen Feld an der Position des jeweiligen Sensors mittels jeweiliger Kreuzkorrelation jedes der Mehrzahl an Messsignalen mit dem Referenzsignal, wobei das Referenzsignal auf einer dem RFID-Transponder (140) zugeordneten Datensequenz basiert;
   und Bestimmen (306) einer Position des RFID-Transponders (140) basierend auf den Korrelationsgraden der Mehrzahl an Messsignalen.

2. Verfahren nach Anspruch 1, wobei das Bestimmen (306) der Position des RFID-Transponders folgendes umfasst:
   Vergleichen der Korrelationsgrade der Mehrzahl an Messsignalen mit Sätzen von Referenzkorrelationsgraden, wobei den Sätzen von Referenzkorrelationsgraden jeweils eine mögliche Position des RFID-Transponders zugeordnet ist.

3. Verfahren nach Anspruch 2, wobei die Referenzkorrelationsgrade jeweils durch eine Simulation bestimmt sind.

4. Verfahren nach Anspruch 2 oder Anspruch 3, wobei den Sätzen von Referenzkorrelationsgraden ferner jeweils eine mögliche Orientierung des RFID-Transponders zugeordnet ist.

5. Verfahren nach einem der Ansprüche 1 bis 4, wobei das magnetische Feld eine von dem RFID-Transponder erzeugte erste Feldkomponente und eine von einem weiteren RFID-Transponder erzeugte zweite Feldkomponente umfasst.

6. Verfahren nach Anspruch 5, wobei die von dem RFID-Transponder erzeugte erste Feldkomponente erste Daten trägt, die auf der dem RFID-Transponder zugeordneten Datensequenz basieren.

7. Verfahren nach Anspruch 6, wobei die zweite Feldkomponente zweite Daten trägt, die auf einer dem weiteren RFID-Transponder zugeordneten weiteren Datensequenz basieren, wobei die ersten Daten orthogonal zu den zweiten Daten sind.

8. Verfahren nach einem der Ansprüche 1 bis 7, wobei die dem RFID-Transponder zugeordneten Datensequenz eine Hadamard-Sequenz, eine Walsh-Sequenz, eine Gold-Sequenz oder eine Folge maximaler Länge ist.

9. Verfahren nach einem der Ansprüche 1 bis 8, ferner umfassend:

   Bestimmen eines weiteren Korrelationsgrads für jedes der Mehrzahl an Messsignalen mit einem weiteren Referenzsignal, wobei das weitere Referenzsignal auf einer einem weiteren RFID-Transponder zugeordneten weiteren Datensequenz basiert; und
   Bestimmen einer Position des weiteren RFID-Transponders basierend auf den weiteren Korrelationsgraden der Mehrzahl an Messsignalen.

10. Verfahren nach einem der Ansprüche 1 bis 9, ferner umfassend:

    Unterbrechen eines Ausprägens eines magnetischen Erregerfelds durch alle das magnetische Erregerfeld ausprägenden Erregerelemente; und
    Wiederaufnehmen des Ausprägens des magnetischen Erregerfelds, um das magnetische Erregerfeld empfangende RFID-Transponder im Wesentlichen zeitgleich über das magnetische Erregerfeld mit Energie zu versorgen.

11. Verfahren nach einem der Ansprüche 1 bis 9, ferner umfassend:
    Ausprägen eines magnetischen Erregerfelds unter Verwendung zumindest eines Erregerelements, wobei auf das magnetisches Erregerfeld ein Befehl aufmoduliert ist, der sämtliche den Befehl empfangende RFID-Transponder anweist, ein magnetisches Feld basierend auf in dem RFID-Transponder gespeicherten Daten auszuprägen.

12. Verfahren nach Anspruch 10 oder Anspruch 11, ferner umfassend:

    Erzeugen eines Referenzmesssignals basierend auf einer Messung des magnetischen Feldes durch einen Referenzsensor; und
    Bestimmen eines Zeitpunkts einer maximalen Korrelation des Referenzmesssignals mit einem Kalibrationssignal, wobei das Kalibrationssignal auf einer einem Referenz-RFID-Transponder zugeordneten Datensequenz basiert, und wobei das magnetische Feld eine von dem Referenz-RFID-Transponder erzeugte Feldkomponente umfasst,
    wobei das Bestimmen (304) des jeweiligen Korrelationsgrads für jedes der Mehrzahl an Messsignalen mit dem Referenzsignal Folgendes umfasst:

Synchronisieren des Referenzsignals und der Mehrzahl an Messsignalen auf den Zeitpunkt der maximalen Korrelation des Referenzmesssignals mit dem Kalibrationssignal.

13. Verfahren nach Anspruch 12, wobei das Synchronisieren des Referenzsignals und der Mehrzahl an Messsignalen Folgendes umfasst:

Korrelieren des synchronisierten Referenzsignals mit nur einem einzigen Signalabschnitt des Messsignals für zumindest eines der Mehrzahl an Messsignalen, wobei der Signalabschnitt nur Messwerte des Messsignals ab dem Zeitpunkt der maximalen Korrelation des Referenzmesssignals mit dem Kalibrationssignal repräsentiert.

14. Verfahren nach Anspruch 13, wobei das Referenzsignal eine Mehrzahl an Signalabschnitten umfasst, die jeweils ein Symbol repräsentieren, und wobei das Korrelieren des synchronisierten Referenzsignals mit nur dem Signalabschnitt des Messsignals Folgendes umfasst:

Korrelieren des Signalabschnitts des Messsignals nur mit einem jeweiligen Teilbereich jedes der Mehrzahl an Signalabschnitten des synchronisierten Referenzsignals, der von einem Beginn und einem Ende des jeweiligen Signalabschnitts des Referenzsignals einen vorbestimmten Abstand aufweist.

15. Vorrichtung (100) zum Lokalisieren eines RFID-Transponders (140), umfassend:

eine Mehrzahl an Sensoren (110-1, 110-2, 110-3, 110-4, 110-5), die eingerichtet sind, eine Mehrzahl an Messsignalen basierend auf einem von der Mehrzahl an Sensoren gemessenen magnetischen Feld zu erzeugen; und
eine Prozessierschaltung (120), die eingerichtet ist:

einen jeweiligen Korrelationsgrad für jedes der Mehrzahl an Messsignalen mit einem Referenzsignal als Maß für die Stärke des von dem RFID-Transponder herrührenden Anteils an dem magnetischen Feld an der Position des jeweiligen Sensors (110-1, 110-2, 110-3, 110-4, 110-5) mittels jeweiliger Kreuzkorrelation jedes der Mehrzahl an Messsignalen mit dem Referenzsignal zu bestimmen, wobei das Referenzsignal auf einer dem RFID-Transponder zugeordneten Datensequenz basiert; und
eine Position des RFID-Transponders (140) basierend auf den Korrelationsgraden der Mehrzahl an Messsignalen zu bestimmen.

## Claims

1. A method (300) for localizing an RFID transponder (140), comprising:

generating (302) a plurality of measurement signals based on a magnetic field measured by a plurality of sensors (110-1, 110-2, ..., 110-5);
determining (304) a respective degree of correlation for each of the plurality of measurement signals with a reference signal as a measure for the strength of the contribution to the magnetic field originating from the RFID transponder (140) at the position of the respective sensor by means of respective cross-correlation of each of the plurality of measurement signals with the reference signal, the reference signal being based on a data sequence associated with the RFID transponder (140); and
determining (306) a position of the RFID transponder (140) based on the degrees of correlation of the plurality of measurement signals.

2. The method of claim 1, wherein determining (306) the position of the RFID transponder comprises: comparing the degrees of correlation of the plurality of measurement signals with sets of reference correlation degrees, the sets of reference correlation degrees each being associated with a possible position of the RFID transponder.

3. The method of claim 2, wherein the reference correlation degrees are each determined by a simulation.

4. The method of claim 2 or claim 3, wherein the sets of reference correlation degrees are further each associated with a possible orientation of the RFID transponder.

5. The method of any one of claims 1 to 4, wherein the magnetic field comprises a first field component generated by the RFID transponder and a second field component generated by another RFID transponder.

6. The method of claim 5, wherein the first field component generated by the RFID transponder carries first data based on the data sequence associated with the RFID transponder.

7. The method of claim 6, wherein the second field component carries second data based on a further data sequence associated with the further RFID transponder, the first data being orthogonal to the second data.

8. The method of any one of claims 1 to 7, wherein the data sequence associated with the RFID transponder is a Hadamard sequence, a Walsh sequence, a Gold sequence, or a maximum length sequence.

9. The method of any one of claims 1 to 8, further comprising:

    determining a further degree of correlation for each of the plurality of measurement signals with a further reference signal, the further reference signal being based on a further data sequence associated with a further RFID transponder; and determining a position of the further RFID transponder based on the further degrees of correlation of the plurality of measurement signals.

10. The method of any one of claims 1 to 9, further comprising:

    interrupting a development of a magnetic exciter field by all of the exciter elements developing the magnetic exciter field; and resuming the development of the magnetic exciter field to energize RFID transponders receiving the magnetic exciter field substantially simultaneously via the magnetic exciter field.

11. The method of any one of claims 1 to 9, further comprising:
    developing a magnetic exciter field using at least one exciter element, wherein a command is modulated onto the magnetic exciter field that instructs all RFID transponders receiving the command to develop a magnetic field based on data stored in the RFID transponder.

12. The method of claim 10 and claim 11, further comprising:

    generating a reference measurement signal based on a measurement of the magnetic field by a reference sensor; and determining a time of a maximum correlation of the reference measurement signal with a calibration signal, wherein the calibration signal is based on a data sequence associated with a reference RFID transponder, and wherein the magnetic field comprises a field component generated by the reference RFID transponder, wherein determining (304) the respective degree of correlation for each of the plurality of measurement signals with the reference signal comprises: synchronizing the reference signal and the plurality of measurement signals to the time of the maximum correlation of the reference measurement signal with the calibration signal.

13. The method of claim 12, wherein synchronizing the reference signal and the plurality of measurement signals comprises:
correlating the synchronized reference signal with only a single signal portion of the measurement signal for at least one of the plurality of measurement signals, the signal portion representing only measurement values of the measurement signal from the time of the maximum correlation of the reference measurement signal with the calibration signal.

14. The method of claim 13, wherein the reference signal comprises a plurality of signal portions each representing a symbol, and wherein correlating the synchronized reference signal with only the signal portion of the measurement signal comprises:
correlating the signal portion of the measurement signal only with a respective sub-region of each of the plurality of signal portions of the synchronized reference signal that has a predetermined distance from a beginning and an end of the respective signal portion of the reference signal.

15. An apparatus (100) for localizing an RFID transponder (140), comprising:

    a plurality of sensors (110-1, 110-2, 110-3, 110-4, 110-5) configured to generate a plurality of measurement signals based on a magnetic field measured by the plurality of sensors; and a processing circuit (120) configured to:

        to determine a respective degree of correlation for each of the plurality of measurement signals with a reference signal as a measure for the strength of the contribution to the magnetic field originating from the RFID transponder at the position of the respective sensors (110-1, 110-2, 110-3, 110-4, 110-5) by means of respective cross-correlation of each of the plurality of measurement signals with the reference signal, the reference signal being based on a data sequence associated with the RFID transponder; and a position of the RFID transponder (140) based on the degrees of correlation of the plurality of measurement signals.

**Revendications**

1. Procédé (300) pour localiser un transpondeur RFID (140), comprenant le fait de :

    générer (302) une pluralité de signaux de mesure sur la base d'un champ magnétique mesuré par une pluralité de capteurs (110-1, 110-2, ..., 110-5) ;

déterminer (304) un degré de corrélation respectif pour chacun de la pluralité de signaux de mesure avec un signal de référence en tant que mesure de l'intensité de la contribution au champ magnétique provenant du transpondeur RFID (140) à l'emplacement du capteur respectif par corrélation croisée respective de chacun de la pluralité de signaux de mesure avec le signal de référence, le signal de référence étant basé sur une séquence de données associée au transpondeur RFID (140) ; et

déterminer (306) une position du transpondeur RFID (140) sur la base des degrés de corrélation de la pluralité de signaux de mesure.

2. Procédé selon la revendication 1, dans lequel le fait de déterminer (306) la position du transpondeur RFID comprend le fait de :

comparer les degrés de corrélation de la pluralité de signaux de mesure avec des ensembles de degrés de corrélation de référence, une position possible du transpondeur RFID étant associée à chacun des ensembles de degrés de corrélation de référence.

3. Procédé selon la revendication 2, dans lequel les degrés de corrélation de référence sont déterminés chacun par une simulation.

4. Procédé selon la revendication 2 ou la revendication 3, dans lequel les ensembles de degrés de corrélation de référence sont en outre chacun associés à une orientation possible du transpondeur RFID.

5. Procédé selon l'une des revendications 1 à 4, dans lequel le champ magnétique comprend une première composante de champ générée par le transpondeur RFID et une deuxième composante de champ générée par un autre transpondeur RFID.

6. Procédé selon la revendication 5, dans lequel la première composante de champ générée par le transpondeur RFID porte des premières données qui sont basées sur la séquence de données associée au transpondeur RFID.

7. Procédé selon la revendication 6, dans lequel la deuxième composante de champ porte des deuxièmes données qui sont basées sur une autre séquence de données associée à l'autre transpondeur RFID, les premières données étant orthogonales aux deuxièmes données.

8. Procédé selon l'une des revendications 1 à 7, dans lequel la séquence de données associée au transpondeur RFID est une séquence de Hadamard, une séquence de Walsh, une séquence d'or ou une séquence de longueur maximale.

9. Procédé selon l'une des revendications 1 à 8, comprenant en outre le fait de :

déterminer un autre degré de corrélation pour chacun de la pluralité de signaux de mesure avec un autre signal de référence, l'autre signal de référence étant basé sur une autre séquence de données associée à un autre transpondeur RFID ; et

déterminer une position de l'autre transpondeur RFID sur la base des autres degrés de corrélation de la pluralité de signaux de mesure.

10. Procédé selon l'une des revendications 1 à 9, comprenant en outre le fait de :

interrompre un développement d'un champ électromagnétique excitateur par tous les éléments excitateurs qui développent le champ électromagnétique excitateur ; et

reprendre le développement du champ électromagnétique excitateur pour alimenter en énergie des transpondeurs RFID recevant le champ électromagnétique excitateur essentiellement en même temps par l'intermédiaire du champ électromagnétique excitateur.

11. Procédé selon l'une des revendications 1 à 9, comprenant en outre le fait de :

développer un champ électromagnétique excitateur en utilisant au moins un élément excitateur, dans lequel une commande est modulée sur le champ électromagnétique excitateur, laquelle commande ordonne à tous les transpondeurs RFID recevant la commande de développer un champ magnétique sur la base de données stockées dans le transpondeur RFID.

12. Procédé selon la revendication 10 ou la revendication 11, comprenant en outre le fait de :

générer un signal de mesure de référence sur la base d'une mesure du champ magnétique par un capteur de référence ; et

déterminer un instant de corrélation maximale du signal de mesure de référence avec un signal d'étalonnage, dans lequel le signal d'étalonnage est basé sur une séquence de données associée à un transpondeur RFID de référence, et dans lequel le champ magnétique comprend une composante de champ générée par le transpondeur RFID de référence,

dans lequel le fait de déterminer (304) le degré de corrélation respectif pour chacun de la pluralité de signaux de mesure avec le signal de référence comprend le fait de :

synchroniser le signal de référence et la pluralité de signaux de mesure au moment de la corrélation maximale du signal de mesure de référence avec le signal d'étalonnage.

13. Procédé selon la revendication 12, dans lequel le fait de synchroniser le signal de référence et la pluralité de signaux de mesure comprend le fait de : corréler le signal de référence synchronisé avec seulement un seul tronçon de signal du signal de mesure pour au moins l'un de la pluralité de signaux de mesure, le tronçon de signal représentant uniquement des valeurs mesurées du signal de mesure à partir de l'instant de la corrélation maximale du signal de mesure de référence avec le signal d'étalonnage.

14. Procédé selon la revendication 13, dans lequel le signal de référence comprend une pluralité de tronçons de signal, chacun représentant un symbole, et dans lequel la corrélation du signal de référence synchronisé avec seulement le tronçon de signal du signal de mesure comprend le fait de : corréler le tronçon de signal du signal de mesure uniquement avec une sous-région respective de chacun de la pluralité de tronçons de signal du signal de référence synchronisé, qui a une distance prédéterminée d'un début et d'une fin du tronçon de signal respectif du signal de référence.

15. Appareil (100) pour localiser un transpondeur RFID (140), comprenant :

une pluralité de capteurs (110-1, 110-2, 110-3, 110-4, 110-5) configurés pour générer une pluralité de signaux de mesure sur la base d'un champ magnétique mesuré par la pluralité de capteurs ; et
un circuit de traitement (120) configuré pour :

déterminer un degré de corrélation respectif pour chacun de la pluralité de signaux de mesure avec un signal de référence en tant que mesure de l'intensité de la contribution au champ magnétique provenant du transpondeur RFID à l'emplacement du capteur respectif (110-1, 110-2, 110-3, 110-4, 110-5) par corrélation croisée respective de chacun de la pluralité de signaux de mesure avec le signal de référence, le signal de référence étant basé sur une séquence de données associée au transpondeur RFID ; et
déterminer une position du transpondeur RFID (140) sur la base des degrés de corrélation de la pluralité de signaux de mesure.

Fig. 1

EP 3 743 852 B1

FIG. 2

Erzeugen einer Mehrzahl
an Messsignalen

302

Bestimmen eines jeweiligen
Korrelationsgrads

304

300

Bestimmen einer Position
des RFID-Transponders

306

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006022815 A1
- US 2004179510 A1
- WO 2006067851 A1